(19) Europäisches Patentamt
European Patent Office
Office européen des brevets

(11) **EP 4 610 697 A1**

(12) **EUROPEAN PATENT APPLICATION**
published in accordance with Art. 153(4) EPC

(43) Date of publication:
**03.09.2025 Bulletin 2025/36**

(21) Application number: **23885150.5**

(22) Date of filing: **14.12.2023**

(51) International Patent Classification (IPC):
***G01T 1/16*** (2006.01)

(86) International application number:
**PCT/CN2023/138951**

(87) International publication number:
**WO 2024/094226 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.06.2023 CN 202310759270**

(71) Applicants:
• **China Nuclear Power Engineering Co., Ltd.
Shenzhen, Guangdong 518124 (CN)**
• **Southeast University
Nanjing, Jiangsu 210000 (CN)**

(72) Inventors:
• **CHEN, Weihua
Shenzhen, Guangdong 518124 (CN)**
• **SONG, Bo
Shenzhen, Guangdong 518124 (CN)**
• **XU, Jianjun
Shenzhen, Guangdong 518124 (CN)**
• **LEI, Wei
Shenzhen, Guangdong 518124 (CN)**

(74) Representative: **Westphal, Mussgnug & Partner,
Patentanwälte mbB
Werinherstraße 79
81541 München (DE)**

(54) **DUAL-ENERGY X-RAY DETECTOR STRUCTURE AND DUAL-ENERGY X-RAY DETECTION METHOD**

(57) A dual-energy X-ray detection structure and a dual-energy X-ray detection method. The dual-energy X-ray detection structure comprises a power source assembly and a detection assembly, wherein the detection assembly comprises a photon absorber, a first electrode assembly and a second electrode assembly; the photon absorber comprises a first side, and a second side arranged opposite the first side; the first electrode assembly is attached to the first side, and the second electrode assembly is attached to the second side; the first electrode assembly comprises a first electrode and a second electrode, the first electrode is connected to a positive electrode output terminal, and the second electrode is connected to a grounding output terminal; and the second electrode assembly comprises a third electrode and a fourth electrode, the third electrode is connected to the positive electrode output terminal, and the fourth electrode is connected to the grounding output terminal. The dual-energy X-ray detector does not require calibration of time and space; the detection speed is fast, and the cost of the detector is low; and signals of a low-energy X-ray and a high-energy X-ray can be respectively acquired, such that the density of an object to be detected can be better distinguished.

FIG. 1

## Description

FIELD

The invention relates to the field of high-energy photon ray detection, in particular to a dual-energy X-ray detection structure and a dual-energy X-ray detection method.

BACKGROUND

Dual-energy X-ray is a ray composed of photons with very high energy (ranging from tens of kiloelectron volts to hundreds of megaelectron volts), which has both wave-like and particle-like properties. Because of the very high photon energy of ray, it has a very strong ability to penetrate objects, which makes them very important applications in medical diagnosis and treatment, nuclear radiation technology, space exploration, material science, industrial non-destructive testing, and biotechnology. In these applications, it is necessary to know the intensity and energy distribution of dual-energy X-ray passing through the detected object, so the detection of the intensity and energy of dual-energy X-ray has important application requirements.

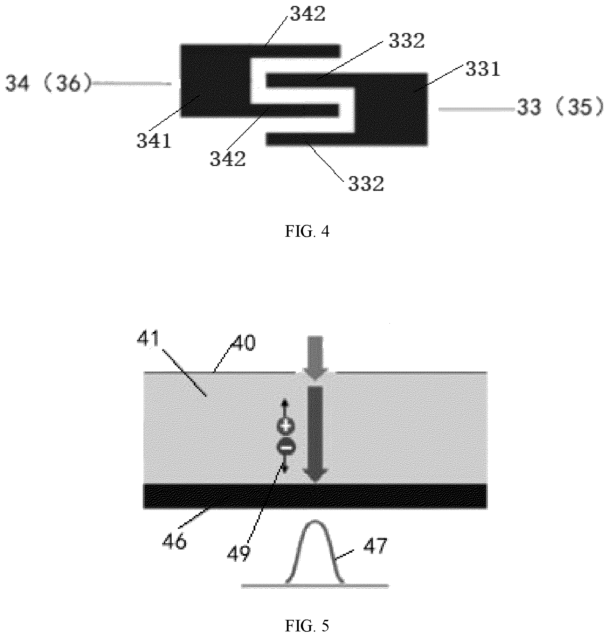

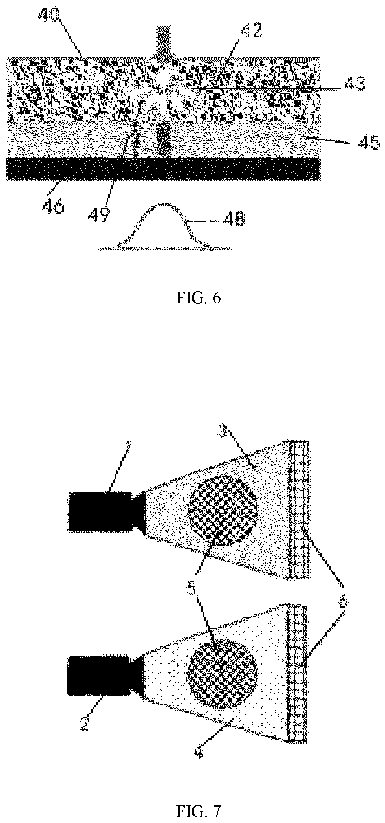

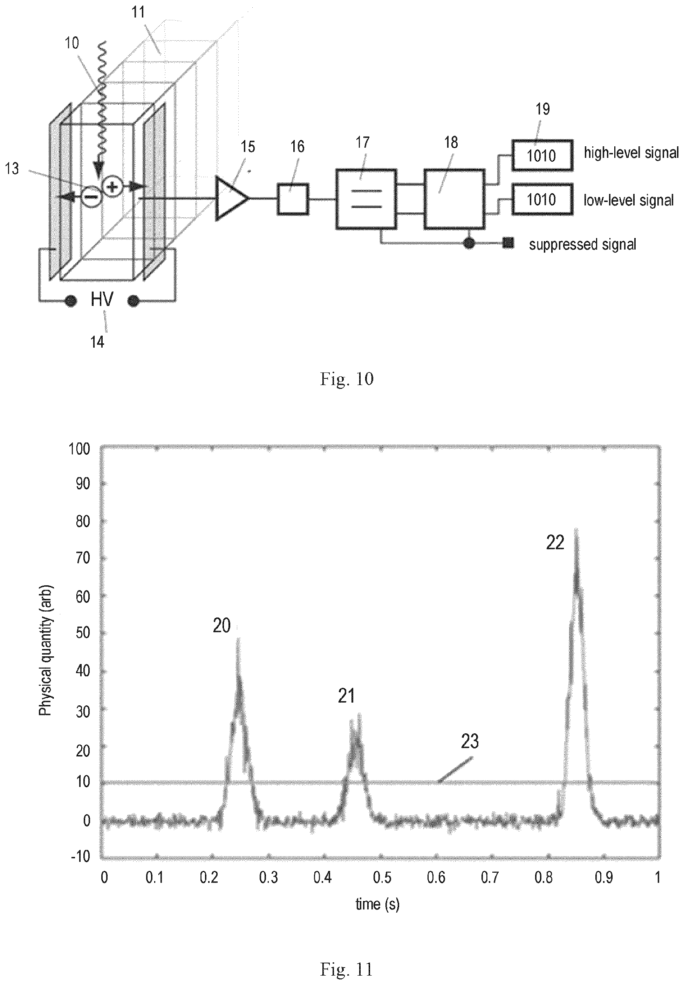

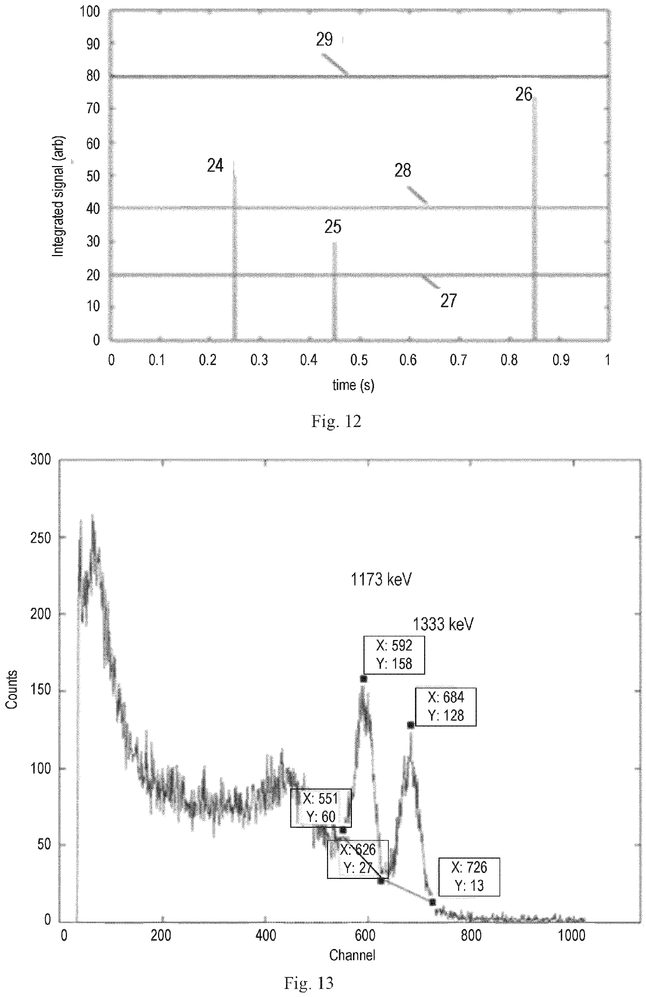

At present, in the prior art, a commonly used detector is an energy-integrating detector, which can be divided into two types: an integrating direct detection structure and an integrating indirect detection structure. As shown in FIG. 5, there is an integrating direct detection structure, and it includes a common electrode 40, a high atomic number photoelectric semiconductor 41, and a readout circuit 46. After the ray enters the detector, its photon energy is gradually deposited in the detector, and a first photo-generated electron-hole pair 49 is generated through the photoelectric effect and the like. The first photo-generated electron-hole pair 49 is separated by the bias electric field, and is collected by the electrode, to generate a photoelectric current (or photovoltage) signal, then the photocurrent (or photovoltage) signal is read out by the array readout circuit 46, with specific reference to the first photocurrent spatial distribution situation 47. As shown in FIG. 6, in the integrating indirect detection structure, the ray first enters the scintillator 42 to generate a visible fluorescence 43, and the visible fluorescence 43 is reirradiated to the semiconductor detector to generate a first photo-generated electron-hole pair 49, which in turn generates a photocurrent (or photovoltage) signal, and finally the photocurrent (or photovoltage) signal is read out by the array readout circuit 46, with specific reference to the second photocurrent spatial distribution situation 48. Because the photon energy of a visible fluorescence 43 is much lower than the photon energy of a ray, the detection information of visible fluorescence 43 can be obtained by using ordinary silicon detectors here. In the detection process of integrating indirect detector, it is necessary to first convert the ray into visible fluorescence 43, and then convert the visible fluorescence 43 into photocurrent signal. As shown in FIG. 10- FIG. 13, it is a typical photon counting detection structure, which includes a sensor 11, a high-voltage power supply 14, a charge amplifier 15, a shaping circuit 16, a comparison circuit 17, an anti-coincidence circuit 18, and a counting circuit 19. In this typical photon counting detection structure, high-energy photons 10 are irradiated on the sensor 11 after incidence, which can cause some physical effects, such as the photoelectric effect, to occur on the sensor 11, generating the second photon-generated electron/photon-generated hole pair 13. The sensor 11 forms a bias electric field under the bias voltage of the high-voltage power supply 14, and the second photon-generated electron/photon-generated hole pair 13 separates in the bias electric field to form a detection current. This physical process is similar to the physical process of the energy-integrating detector, but the requirements for the dark current and noise of the sensor 11 are more stringent. The difference from the energy-integrating detector is that the readout circuit of the photon counting detection structure does not accumulate the second photon-generated electron/photon-generated hole pair 13 over a certain period of time through one integrating capacitor, instead, it sets up a series of reading trigger pulses. The readout circuit samples the current or voltage signal at the edge (generally the rising edge) of the trigger pulse, and then amplifies the readout signal through the charge amplifier 15. A time-series detection pulse signal obtained after amplification by the charge amplification circuit 15 will generate a first detection pulse 20, a second detection pulse 21, and a third detection pulse 22. Among them, the pulse amplitudes of the first detection pulse 20, the second detection pulse 21, and the third detection pulse 22 are not used. Because the reading trigger time is very short, it can be approximately considered that only one incident photon is accepted in one reading pulse. Therefore, the signal amplitudes of the first detection pulse 20, the second detection pulse 21, and the third detection pulse 22 are proportional to the energy of the incident high-energy photon 10. In this photon counting detection structure, a first threshold value 23 can be set. The signals with amplitudes less than the first threshold 23 are considered to be the background signal. On this basis, the shaping circuit 16 shapes the first detection pulse 20, the second detection pulse 21, and the third detection pulse 22 to obtain shaped pulse waveforms. After shaping, the first probe pulse 20, the second probe pulse 21, and the third probe pulse 22 correspond to the fourth probe pulse 24, the fifth probe pulse 25, and the sixth probe pulse 26. In this photon counting detection structure, a second threshold 27, a third threshold 28 and a fourth threshold 29 can be set. The second threshold 27, the third threshold 28, and the fourth threshold 29 correspond to three energy channels (or wavelength channels) respectively. According to the amplitude of detected pulses, it is possible to determined which energy channel the detected ray photons belong to. Finally, the ray energy can be obtained, such as obtaining a gamma ray spectrum,. In the detection process of the photon counting detection structure, the photon energy of different rays is identified by setting different thresholds, but since each detection pulse corresponds to one incident photon, a large number of photons need to be recorded to achieve high-quality detection and imaging. The photon-counting detection structure has a lower technical rate due to the limitation of the carrier transit time in sensor 11, so the imaging time of the photon counting detection structure is significantly longer than the imaging time of the energy-integrating detector, which makes the longer imaging time a great constraint on the detection of dynamic objects. In addition, the photon counting detection structure captures the signal generated by only one incident photon for each trigger count in the detection process. When the incident flux of the rays is very large and the number of incident ray photons per unit time is large, it is difficult to ensure that the detection signal of only one ray photon is captured at the trigger edge, resulting in a large error in the energy spectrum distribution of the detected ray. When the detection signal of the photon counting detection structure is weak, the charge amplifier 15 with a higher gain is needed. At the same time, the photon counting detection structure also needs to process the detection signal through the shaping circuit 16, the comparison circuit 17, the anti-coincidence circuit 18, the counting circuit 19, and other circuits.

At present, there are mainly the following problems:

1. The detector is complex in structure, and it needs time and space calibration when in use;

2. The photon counting detection structure needs to record a single photon detection pulse, which leads to a slow detection speed. In addition, the photon counting detection structure also needs circuits such as shaping, comparison, and reading, so the production cost is high;

3. The existing integrating direct detector and indirect detector can't obtain the detection signals of low-energy X-ray and high-energy X-ray, respectively, so they can't better distinguish the density of the detected object.

SUMMARY

The technical problem to be solved by the invention is to provide a structure and a detection method of the dual-energy X-ray detector, and the structure of the dual-energy X-ray detector can respectively obtain low-energy X-ray signals and high-energy X-ray signals.

The technical scheme adopted by the invention to solve the technical problems is as follows: provides a dual-energy X-ray detection structure, comprising a power supply assembly and a detection assembly, wherein the power supply assembly has a positive electrode output terminal and a grounding output terminal;

The dual-energy X-ray comprises a low-energy X-ray and a high-energy X-ray;

The detection assembly comprises a photon absorber, a first electrode assembly and a second electrode assembly symmetrically attached to both sides of the photon absorber;

The photon absorber comprises a first side for the incidence of the dual-energy X-ray and a second side opposite to the first side, wherein the low-energy X-ray is configure to generate photo-generated electron-hole pairs on the first side and the high-energy X-ray is configure to generate photo-generated electron-hole pairs on the second side;

The first electrode assembly is attached to the first side of the photon absorber, and the second electrode assembly is attached to the second side of the photon absorber;

The first electrode assembly comprises at least one first electrode and at least one second electrode, wherein one of the at least one first electrode and the at least one second electrode is connected to the positive electrode output terminal, and the other of the at least one second electrode and the at least one first electrode is connected to the grounding output terminal; when a bias voltage is applied to the first electrode assembly, a potential difference is formed between the first electrode and the second electrode, so that photo-generated electrons and photo-generated holes are generated by the photo-generated electron-hole pairs generated by the incidence of the low-energy X-ray in an area near the first side, and then they drift toward the at least one first electrode and the at least one second electrode, respectively, to form the detection signal of the low-energy X-ray.

The second electrode assembly comprises at least one third electrode and at least one fourth electrode, wherein one of the at least one third electrode and the at least one fourth electrode is connected to the positive electrode output terminal, and the other of the at least one fourth electrode and the at least one third electrode is connected to the grounding output terminal, when a bias voltage is configure to the second electrode assembly, a potential difference is formed between the third electrode and the fourth electrode, so that photo-generated electrons and photo-generated holes are generated by the photo-generated electron-hole pairs generated by the incidence of the high-energy X-ray in an area near the second side, and then they drift toward the at least one third electrode and the at least one fourth electrode, respectively, to form the detection signal of the high-energy X-ray.

Preferably, the energy level of the low-energy X-ray is tens of thousands of electron volts;

The energy level of the high-energy X-ray is hundreds of thousands of electron volts to millions of electron volts.

Preferably, the photon absorber is one of cadmium telluride, cadmium zinc telluride, and perovskite single crystal.

Preferably, the thickness of the photon absorber along the incident direction of an dual-energy X-ray is 5 mm to 10 mm.

Preferably, the at least one first electrode, the at least one second electrode, the at least one third electrode, and the at least one fourth electrode are all interdigitated electrodes;

The interdigitated electrodes comprise a bottom, and rectangular teeth symmetrically arranged on both sides of the bottom and extending outwards from the bottom, and the rectangular teeth and the bottom form a concave shape structure.

Preferably, the power supply assembly is a bias power supply with the positive electrode output end and the grounding output terminal, the at least one first electrode and the at least one third electrode are connected to the positive electrode output terminal, and the at least one second electrode and the at least one fourth electrode are connected to the grounding output terminal.

Preferably, the detection assembly further comprises a first differential amplifier and a second differential amplifier, wherein the first differential amplifier is connected to the first electrode and the second electrode, respectively, an electrical loop is formed between the first electrode and the second electrode for amplifying the current signal on the first electrode assembly, the second differential amplifier is connected to the third electrode and the fourth electrode, respectively, an electrical loop is formed between the third electrode and the fourth electrode for amplifying the current signal on the second electrode assembly.

The invention also provides a ray detection method, applying any one of the ray detection structure and comprises the following steps:

S1: the power supply assembly applies a bias voltage to the first electrode assembly or the second electrode assembly, when the bias voltage is applied to the first electrode assembly, the second electrode assembly is configure to suspended, and a potential difference is formed between the first electrode and the second electrode; when the bias voltage is applied to the second electrode assembly, the first electrode assembly is configure to suspended, and the potential difference is formed between the third electrode and the fourth electrode;

S2: irradiating the dual-energy X-ray into the first side, causing the low-energy X-ray to generate photo-generated electron-hole pairs near the first side, and the high-energy X-ray to generate photo-generated electron-hole pairs near the second side; wherein when a bias voltage is applied to the first electrode assembly, a potential difference between the first electrode and the second electrode causes the photo-generated electron-hole pairs generated by the low-energy X-ray to generate the photo-generated electrons and the photo-generated holes, and they drift toward the at least one first electrode and the at least one second electrode, respectively; when a bias voltage is applied to the second electrode assembly, a potential difference between the third electrode and the fourth electrode causes the photo-generated electron-hole pairs generated by the high-energy X-ray to generate the photo-generated electrons and the photo-generated holes, and they drift toward the at least one third electrode and the at least one fourth electrode, respectively.

S3: obtaining the photo-generated electrons and photo-generated holes drifting on one side of the first electrode assembly, and obtaining the photo-generated electrons and photo-generated holes drifting on one side of the second electrode assembly;

S4: based on the photo-generated electrons and the photo-generated holes drifting on one side of the first electrode assembly, obtaining a current signal, to obtain a detection signal corresponding the low-energy X-ray, and based on the photo-generated electrons and the photo-generated holes on one side of the second electrode assembly, obtaining a current signal, to obtain a detection signal corresponding the high-energy X-ray.

Preferably, in the step S1, when the bias voltage is applied to the first electrode assembly, the first electrode assembly forms an electric field perpendicular to the dual-energy X-ray on the first side, and when the bias voltage is applied to the second electrode assembly, the second electrode assembly forms an electric field perpendicular to the dual-energy X-ray on the second side.

Preferably, before the step S1, it comprises:
Step S0: attching the first electrode assembly to the first side and the second electrode assembly to the second side, wherein the at least one first electrode and the at least one third electrode are connected to the positive electrode output terminal of the power supply assembly, and the at least one second electrode and the at least one fourth electrode are connected to the grounding output terminal of the power supply assembly.

Preferably, after the step S4, it further comprises:
S5, obtaining the density of the detected object based on the detection signals of the low-energy X-ray and the high-energy X-ray, and colorizing the detection signals of the low-energy X-ray and the high-energy X-ray.

The structure of the dual-energy X-ray detector has the following beneficial effects:

1, a ray source and a detector are adopted, so that the structure of the corresponding lower detection imaging system is simpler, and therefore, th dual-energy X-ray detector does not require calibration of time and space;

2. Compared with the commonly used photon counting detection method, the structure of the dual-energy X-ray detector adopts the signal integration working mode, and does not need to record the detection pulse of a single photon, so the detection speed is faster. In addition, the structure of the dual-energy X-ray detector does not need expensive sensitive charge amplification circuits and shaping circuits, which reduces the detector cost.

3. Because the X-ray detector provided by the invention can obtain low-energy and high-energy X-ray signals respectively, it can better distinguish the density of the detected object.

BRIEF DESCRIPTION OF THE DRAWINGS

The invention will be further described with reference to the attached drawings and examples, in which:

FIG. 1 is a schematic diagram of the ray detection structure of the present invention;

FIG. 2 is a diagram showing the relationship between the generation rate of photo-generated electron-hole pairs and photon energy of the present invention;

FIG. 3 is an electric field distribution diagram of the ray detection structure of the present invention;

FIG. 4 is a schematic diagram of the installation of the first electrode and the second electrode (the third electrode and the fourth electrode) of the present invention;

FIG. 5 is a schematic diagram of a direct detection structure in an energy-integrating detector of the prior art;

FIG. 6 is a schematic diagram of an indirect detection structure in an energy-integrating detector of the prior art;

FIG. 7 is a structure schematic diagram of a detector with two X-ray tubes set in parallel in the prior art;

FIG. 8 is a structure schematic diagram of a detector with two X-ray tubes set crossed in the prior art;

FIG. 9 is a structure schematic diagram of two detectors set on one X-ray tube in the prior art;

FIG. 10 is a schematic diagram of a photon counting detection structure in the prior art;

FIG. 11 is a detection imaging diagram of a photon counting detection structure providing a background signal in the prior art;

FIG. 12 is the imaging diagram of the detection imaging of the photon counting detection structure after filtering in the prior art;

FIG. 13 is a gamma ray spectrum formed by a photon counting detection structure in the prior art.

DETAILED DESCRIPTION

To have a clearer understanding of the technical features, purposes, and effects of the present invention, specific embodiments of the present invention will now be described in detail with reference to the attached drawings.

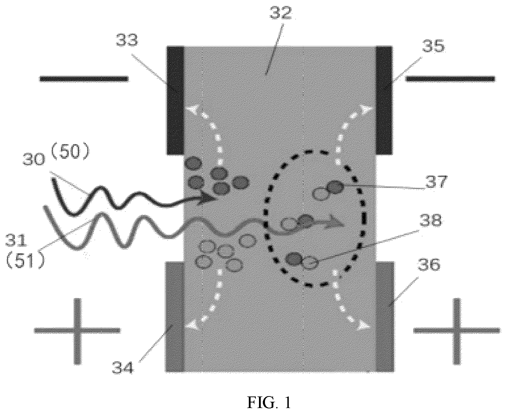

As shown in FIG. 1, the present invention provides a dual-energy X-ray detection structure, which may includes a power supply assembly and a detection assembly. The power supply assembly is configured to provide bias voltage during detection process. The detection assembly is configured to measure the energy of ray after incidence. In which, dual-energy X-ray has a broad energy spectrum. The dual-energy X-ray includes low-energy X-ray 30 and high-energy X-ray 31, in which, the energy of the low-energy X-ray is tens of thousands of electron volts, and the energy of the high-energy X-ray is hundreds of thousands of electron volts to millions of electron volts. Specifically, the energy of the low-energy X-ray is (20,000-80,000) electron volts, and the energy of the high-energy X-ray is (80,000-150,000) electron volts.

The power supply assembly is a bias power supply, but it is not limited to bias power supply. The bias power supply has a plurality of groups of output channels, for example, it has two groups of output channels, and each group of output channels has one positive electrode output terminal and one grounding output terminal.

The detection assembly may includes a first electrode assembly, a second electrode assembly, a photon absorber 32, a first differential amplifier, and a second differential amplifier. After the dual-energy X-ray is incident on the photon absorber 32, photo-generated electron-hole pairs are generated at different positions in the photon absorber 32, in which, the low-energy X-ray generates photo-generated electron-hole pairs closer to the incident side, and the high-energy X-ray generates photo-generated electron-hole pairs on the side opposite to the incident side. A first electrode assembly and a second electrode assembly are symmetrically attached to both sides of the photon absorber 32, and both the first electrode assembly and the second electrode assembly can be connected to the power supply assembly. In which, when the first electrode assembly is connected to the power supply assembly, and the first power supply assembly applies a bias voltage to the first electrode assembly, a potential difference is formed at the attached side of the first electrode assembly, so that the photo-generated electron-hole pairs near the first electrode assembly generate photo-generated electrons 38 and photo-generated holes 37, which then drift toward the first electrode 34 and the second electrode 33, respectively. Similarly, when the second electrode assembly is connected to the power supply assembly, and the power supply assembly applies a bias voltage to the second electrode assembly, a potential difference is formed at the attached side of the second electrode assembly, so that the photo-generated electron-hole pairs near the second electrode assembly generate photo-generated electrons 38 and photo-generated holes 37, which then drift toward the third electrode 36 and the fourth electrode 35, respectively. The first differential amplifier is connected to the first electrode assembly to form an electrical loop, which is configured to amplify the current signal on the first electrode assembly. After the current signal is amplified by the first amplifier and converted through an analog-to-digital converter, the amplified current signal is transmitted to the upper computer to obtain the detection signal of the corresponding ray in the dual-energy X-ray on the side of the first electrode assembly. The second differential amplifier is connected to the second electrode assembly to form an electrical loop, which is configured to amplify the current signal on the second electrode assembly. Similarly, the amplified current signal is transmitted to the upper computer to obtain the detection signal of the corresponding ray in the detected dual-energy X-ray on the side of the second electrode assembly.

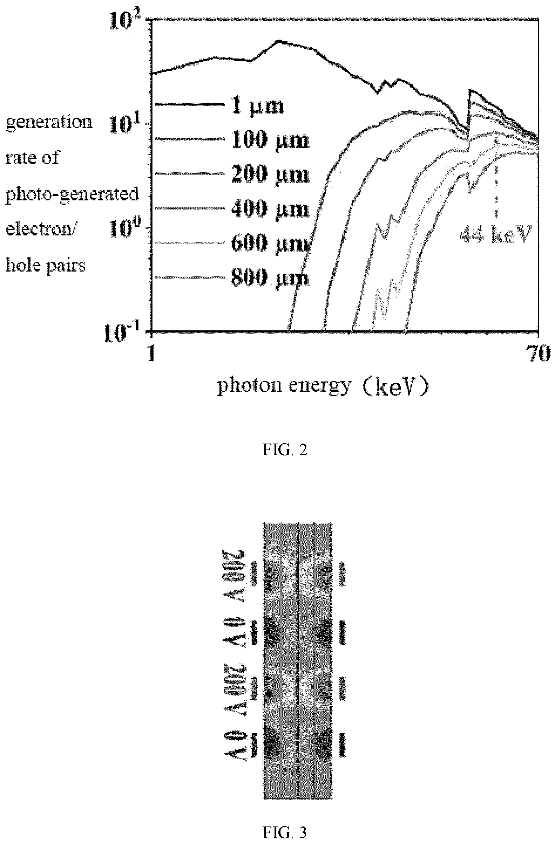

As shown in FIGS. 1 and 2, the photon absorber 32 may be cubic, but is not limited to cubic. The photon absorber 32 may include a first side for the incidence of the dual-energy X-ray and a second side provided opposite to the first side. One incident window can be arranged on the first side so that dual-energy X-ray can be more accurately incident onto the photon absorber 32. The incident window can be arranged as a rectangular window, but is not limited to a rectangular window, for example, it is a circular window; for another example, the incident window can also be arranged as a diamond -shaped window. In this embodiment, when the first side is configured, the first side can be arranged on either side of the photon absorber 32 on the premise of meeting the incident requirement of the dual-energy X-ray. Here, the incident requirement of the dual-energy X-ray means that the cross section of the incident surface of the dual-energy X-ray and the incident thickness of the photon absorber 32 along the incident direction of the dual-energy X-ray should meet certain requirements. Specifically, the cross section of the incident surface ensures that the dual-energy X-ray can be completely incident onto the photon absorber 32 when the dual-energy X-ray incident, and the incident thickness ensure that the dual-energy X-ray does not lose energy because it passes through the photon absorber 32 after the dual-energy X-ray enters the photon absorber 32. During detection, dual-energy X-ray is incident through the incident window on the first side, causing low-energy X-ray to generate photo-generated electron-hole pairs on one side of the incident window, and high-energy X-ray to generate photo-generated electron-hole pairs on the opposite side of the incident window.

The material of the photon absorber 32 can be one of cadmium telluride, cadmium zinc telluride, or perovskite single crystal, preferably perovskite single crystal. The thickness of the photon absorber 32 along the incident direction of ray is 5mm to 10 mm, preferably 5 mm. It should be noted that in the process of selecting the thickness of the photon absorber 32, it is necessary to ensure that the ray does not penetrate out of the photon absorber 32 during the detection process. Therefore, the thickness of the photon absorber 32 is related to the incident energy intensity of the dual-energy X-ray. When the incident energy of the dual-energy X-ray is strong, the thickness of the photon absorber 32 is relatively greater. In this embodiment, for example, when the energy of the incident dual-energy X-ray is 70keV, and the material of the photon absorber 32 is made of perovskite single crystal, the thickness of the photon absorber needs to be 5 mm.

As shown in FIG. 1, the first electrode assembly may include at least one first electrode 34 and at least one second electrode 33. The first electrode 34 is attached to the first side of the photon absorber 32 and is connected to the positive electrode output terminal of the bias power supply through a cable. The second electrode 33 is attached to the first side of the photon absorber 32 and is connected to the ground output terminal of the bias power supply through a cable. There is a certain distance between the first electrode 34 and the second electrode 33. When a bias voltage is applied to the first electrode 34 and the second electrode 33 by the bias power supply, a potential difference is formed between the first electrode 34 and the second electrode 33 at the side where they are attached. Consequently, an electric field perpendicular to the ray is formed between the first electrode 34 and the second electrode 33 so that the photo-generated electron-hole pairs near one side (the first side) of the first electrode assembly generate photo-generated electrons 38 and photo-generated holes 37, and then drift toward the first electrode 34 and the second electrode 33, respectively. Of course, the first electrode 34 can also be connected to the grounding output terminal of the bias power supply through a cable, and the second electrode 33 can be connected to the positive electrode output terminal of the bias power supply through a cable.

Further, as shown in FIG. 4, the first electrode 34 and the second electrode 33 may be interdigitated electrodes with the same specifications and sizes, but they are not limited to the same specifications and sizes, and may also be configured as interdigitated electrodes with different specifications and sizes. The interdigitated electrode may include a bottom 331 and rectangular teeth 332 symmetrically arranged on both sides of the bottom and extending outwards from the bottom, so that the rectangular teeth 332 and the bottom 331 form a concave structure. In which, the bottom 331 is rectangular, and the length of the bottom 331 is 2 mm. The rectangular teeth 332 are rectangular, and the lengths of the rectangular teeth 332 extending outward from both sides of the bottom 331 are 2.4 mm. When the first electrode 34 and the second electrode 33 are being attached, two rectangular teeth 332 of the second electrode 33 are attached between two rectangular teeth 342 of the first electrode 34. The height difference between the two rectangular teeth 342 of the first electrode 34 and the two rectangular teeth 331 of the second electrode 33 after attaching is 0.4mm, the distance difference between the rectangular tooth 332 of the second electrode 33 attached to the two rectangular teeth 342 of the first electrode 34 and the bottom 341 of the first electrode 34 is 0.4mm. It is to be noted that the first electrode 34 and the second electrode 33, while meeting the requirement of forming an electric potential difference on the side where they are attached, can also be configured as other types of electrodes, such as ring electrodes.,

Further, in another embodiment, two or other numbers of first electrodes 34 may be provided. When at least two first electrodes 34 are provided, a plurality of first electrodes 34 are attached to the surface of the photon absorber 32 in parallel to the incident direction of the ray, and a plurality of the first electrodes 34 are attached to the same side. When a plurality of the first electrodes 34 are attached, the responsivity of the detector can be improved. It should be noted that when a plurality of first electrodes 34 are provided, all the first electrodes 34 are connected to the same output terminal of the bias power supply through cables. Of course, a plurality of second electrodes 33 can also be provided, and the specific arrangement method is the same as that when a plurality of first electrodes 34 are provided, which is not repeated here. Similarly, a plurality of second electrodes 33 are connected to the same output terminal of the bias power supply through cables.

As shown in FIG. 1, the second electrode assembly may include at least one third electrode 36 and fourth electrode 35, the third electrode 36 and the fourth electrode 35 are both interdigitated electrodes with the same size and specifications, and similarly, they are not limited to interdigitated electrodes with the same size and specifications. The third electrode 36 is attached to the second side and connected to the positive electrode output terminal of the bias power supply through a cable, and the fourth electrode 35 is attached to the second side and connected to the grounding output terminal of the bias power supply through a cable. There is a certain distance between the third electrode 36 and the fourth electrode 35. When a bias voltage is applied to the third electrode 36 and the fourth electrode 35 by a bias voltage, a potential difference is formed on the side where they are attached, and then an electric field perpendicular to the ray is formed between the third electrode 36 and the fourth electrode 35, such that the photo-generated electron-hole pairs near the second electrode assembly side (the second side) generate photo-generated electron 38 and photo-generated hole 37, and then they drift toward the third electrode 36 and the fourth electrode 35, respectively. The mounting methods of the third electrode 36 and the fourth electrode 35 are the same as the mounting methods of the first electrode 34 and the second electrode 33 described above, so the details will not be described here again. Similarly, the third electrode 36 may be connected to the grounding output terminal through a cable, and the fourth electrode 35 may be connected to the positive electrode output terminal through a cable. It is to be noted that the third electrode 36 and the fourth electrode 35 , while meeting the requirement of forming an electric potential difference on the side where they are attached, can also be configured as other types of electrodes, such as ring electrodes.

Further, in another embodiment, two or other numbers of third electrodes 36 may be provided. When at least two third electrodes 36 are provided, the attachment method of the third electrodes 36 is the same as the attachment method of the above-mentioned two or more first electrodes 34, which is not repeated here. When a plurality of third electrodes 36 are attached, the responsivity of the detector can be improved. It should be noted that when a plurality of third electrodes 36 are provided, all the third electrodes 36 are connected to the same output terminal of the bias power supply through cables. Of course, a plurality of fourth electrodes 35 can also be provided, and the specific arrangement method is the same as that when a plurality of first electrodes 34 are provided, which is not repeated here. Similarly, a plurality of fourth electrodes 35 are connected to the same output terminal of the bias power supply through cables.

Further, in another embodiment, the second electrode assembly can be attached to the first side, and the first electrode assembly can be attached to the second side. Unlike the first electrode assembly is attached to the first side and the second electrode assembly is attached to the second side as described above, when the second electrode assembly is attached to the first side and the first electrode assembly is attached to the second side, applying a bias voltage to the second electrode assembly causes the photo-generated electron-hole pairs generated by low-energy X-ray to generate photo-generated electron 38 and photo-generated holes 37, which then drift toward the third electrode 36 and the fourth electrode 35, respectively. The first electrode assembly causes the photo-generated electron-hole pairs generated by high-energy X-ray to generate photo-generated electrons 38 and photo-generated holes 37, which then drift toward the first electrode 34 and the second electrode 33, respectively.

In this embodiment, the first electrode 34, the second electrode 33, the third electrode 36, and the fourth electrode 35 are all interdigitated electrodes with the same sizes and specifications. The mounting methods of the third electrode 36 and the fourth electrode 35 are the same as the mounting methods of the first electrode 34 and the second electrode 33, so the details are not repeated here.

In this embodiment, the first differential amplifier is connected to the first electrode 34 and the second electrode 33, respectively, so that an electrical loop is formed between the first electrode 34 and the second electrode 33. The current signals of the first electrode 24 and the second electrode 33 are amplified by the first differential amplifier, followed by analog-to-digital conversion, and then the amplified current signals are transmitted to the upper computer for display, thereby obtaining the detection signal of the corresponding ray of the dual-energy X-ray detected from the first side. Similarly, the second differential amplifier is connected to the third electrode 36 and the fourth electrode 35, respectively, so that an electrical loop is formed between the third electrode 36 and the fourth electrode 35. The current signals of the third electrode 36 and the fourth electrode 35 are amplified by the second differential amplifier, followed by analog-to-digital conversion, and then the amplified current signals are transmitted to the upper computer for display, thereby obtaining the detection signal of the corresponding rays of the dual-energy X-ray detected from the second side.

Further, in another embodiment, the current signal can also be obtained in other ways. For example, obtaining by directly measuring with a standard ammeter. For another example, one resistor can be added between two electrodes attached to the same side, and the current signal can be derived by measuring the voltage across the resistor and converting it. Specifically, when the current signal at one side of the first electrode assembly is measured by adding a resistor, one resistor can be added between the first electrode 34 and the second electrode 33, and then the voltage across the resistor is measured to be converted into a current signal.

As shown in FIG. 3, when the dual-energy X-ray detector is applied, the emission source is turned on, and the dual-energy X-ray includes low-energy X-ray 30 and high-energy X-ray 31. After the dual-energy X-ray is incident on the photon absorber 2, the low-energy X-ray 30 generates photo-generated electron-hole pairs on the incident side (the first side), and the high-energy X-ray 31 generates photo-generated electron-hole pairs on the opposite side (the second side). To illustrate the specific detection process when the first electrode assembly is attached to the first side:

Turn on the bias power supply and adjust the output voltage to meet the requirements. In this embodiment, the output voltage of the positive electrode output terminal is 200V, while the output voltage of the grounding output terminal is 0 V. First, the bias voltage is applied to the first electrode assembly through the bias power supply. At this time, the second electrode assembly is suspended. Under the action of the bias power supply, the photon absorber 32 generates an electric field perpendicular to the incident direction of the dual-energy X-ray on one side attached the first electrode assembly. Under the action of the electric field, the photo-generated electron-hole pairs near the first electrode assembly generate photo-generated electrons 38 and photo-generated holes 37, and then they drift toward the first electrode 34 and the second electrode 33, respectively. This allows the detection signal of low-energy X-ray to be read. Next, a bias voltage is applied to the second electrode assembly through a bias power supply. At this time, the first electrode assembly is suspended. Under the action of the bias voltage, the photon absorber 32 generates an electric field perpendicular to the incident direction of the dual-energy X-ray on the side attached the second electrode assembly. Under the action of the electric field, the photo-generated electron-hole pairs near the second electrode assembly generate photo-generated electrons 38 and photo-generated holes 37, and then they drift toward the third electrode 36 and the fourth electrode 35, respectively. This allows the detection signal of high-energy X-ray to be read. In this embodiment, the dual-energy X-ray detection structure can obtain the detection signal of the low-energy X-ray and the detection signal of the high-energy X-ray, respectively, so that the density of the detected object can be better distinguished, and improving the recognition ability of the dual-energy X-ray image to the detected object when colorizing the X-ray image.

It is also to be noted here that in the prior art, energy-integrating detector, dual-energy X-ray detector, and the like are commonly used.

In which, as shown in FIG. 5, the energy-integrating detector is often used to obtain information about a high-energy ray, that is, the photocurrent is proportional to the total energy deposited by the ray in the detector over a certain period of time. The intensity of the ray can be obtained by measuring the magnitude of the photocurrent. A radiographic grayscale image can be obtained by using the energy-integrating detector, and its grayscale value is proportional to the ratio of $I/I_0$, in which, the ratio of $I/I_0$ can be determined by the Lambert-Beer law involved in Formula 1, which describes the energy attenuation of rays in the detected object describing the energy attenuation of rays in the detected object in formula-Lambert-Beer law. The calculation process of Formula 1 is as follows:

$$I = I_0 e^{-\mu d} \qquad \text{Formula 1}$$

Where $I_0$ and $I$ are the intensities of the ray before and after it is incident on the detected object, respectively. The d is the thickness of the detected object. The μ is the linear attenuation coefficient of the detected object. The value of μ is mainly determined by the interaction cross section between the ray and the object, the density of the object, and the effective atomic number, and it is directly related to the substance composition of the detected object. The d only depends on the geometric size of the detected object, and is independent of the material's composition.

As can be seen from the above formula 1, the parameters μ and d affect the ratio of $I/I_0$ at the same time. Therefore, we can't directly get the composition of the detected object (that is, solve the μ) from the radiographic grayscale image ($I/I_0$), so the radiographic image can only give the morphological information of the detected object, but can't provide the histological information.

The energy-integrating detector may include an energy direct integration detector and an energy indirect integration detector.

Dual-energy X-ray detectors have three different structures, the first is a structure in which two X-ray tubes are arranged in parallel, the second is the structure in which two X-ray tubes are arranged in a crossed manner, and the third is the structure in which two detectors are arranged on one X-ray tube.

As shown in FIG. 7, in the structure where two X-ray tubes are arranged in parallel, the dual-energy X-ray detector can include a high anode voltage X-ray tube 1, a low anode voltage X-ray tube 2, a high-energy X-ray beam 3, a low-energy X-ray beam 4, and two X-ray detectors 6. The high anode voltage X-ray tube 1 is installed at one end of the high-energy X-ray beam 3, with one of the X-ray detectors 6 is installed at the other end of the high-energy X-ray beam 3 and configured opposite to the high anode voltage X-ray tube 1. The low anode voltage X-ray tube 2 is installed at one end of the low-energy X-ray beam 4, with the other X-ray detector 6 is installed at the other end of the low-energy X-ray beam 4 and configured opposite to the low anode voltage X-ray tube 2. The anode voltage of the dual-energy X-ray detector can be switched between higher voltage and lower voltage. When using higher anode voltage, the energy of the X-ray is higher. When using lower anode voltage, the energy of the X-ray is lower. During detection, the detected object 5 is first irradiated by X-ray generated by the high anode voltage to obtain high-energy X-ray images, and then the detected object 5 is irradiated by X-ray generated by low anode voltage to obtain low-energy X-ray images. In the aforementioned dual-energy X-ray detector, the ray imaging of the detected object can't be carried out at the same time, so it is necessary to require image time alignment, which will cause great errors in the imaging of dynamic objects.

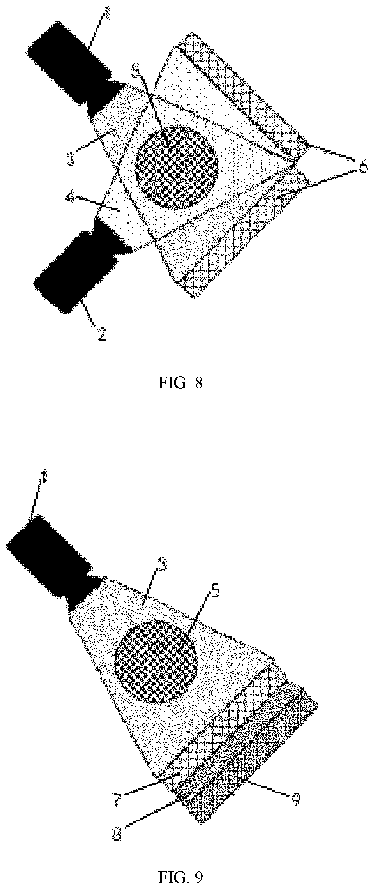

As shown in FIG. 8, in the structure where two X-ray tubes are crossed, the high-energy X-ray beam 3 and the low-energy X-ray beam 4 in the dual-energy X-ray detector are arranged in an obliquely crossed manner, which enables the high-energy X-ray beam 3 and the low-energy X-ray beam 4 can simultaneously image the detected object 5, while the spatial displacement of the detected object 5 is avoided. However, the imaging projection angle of the high-energy X-ray beam 3 is different from the projection angle of the low-energy X-ray beam 4, and the ray images need to be aligned in space. Due to the different projection angles of high-energy X-ray beam 3 and low-energy X-ray beam 4, some errors are introduced into the reconstructed image.

As shown in FIG. 9, in the structure in which two detectors are arranged on one X-ray tube, only using one high anode voltage X-ray tube 1, and the high anode voltage X-ray tube 1 is installed at one end of the X-ray tube, and a low-energy X-ray detector 7, a low-energy X-ray filter plate 8, and a high-energy X-ray detector 9 are installed at the opposite end of the high anode voltage X-ray tube 1. The low-energy X-ray detector 7 is installed at one side close to the high anode voltage X-ray tube 1, while the high-energy X-ray detector 9 is installed at one side far away from the high anode voltage X-ray tube 1, and a low-energy X-ray filter plate 8 is installed between the low-energy X-ray detector 7 and the high-energy X-ray detector 9. Among them, the low-energy X-ray detector 7 detects low-energy X-ray signals, and the high-energy X-ray detector 9 detects high-energy X-ray signals. After the X-ray generated by the high anode voltage X-ray tube 1 irradiates the detected object 5, the X-ray is first projected to the low-energy X-ray detector 7, and the low-energy X-ray detector 7 uses a relatively thin photon absorption layer to measure the low-energy X-ray. The high-energy X-ray photons pass through the low-energy X-ray detector 7 and enter the low-energy X-ray filter plate 8. The low-energy X-ray filter plate 8 filters the low-energy X-ray, and the high-energy X-ray passes through the low-energy X-ray filter plate 8, while the high-energy X-ray passes through the low-energy X-ray filter plate 8 and is measured by the high-energy X-ray detector 9. The structure in which two detectors are arranged on the X-ray tube avoids the spatial and temporal alignment issues of the detected object. However, the structure in which two detectors are arranged on the X-ray tube is complicated, which increases the production cost. In addition, when the structure in which two detectors are arranged on the X-ray tube is detecting, the metal frame and readout circuit will absorb ray and form some artifacts, which will cause crosstalk to the images formed by the high-energy X-ray detectors.

Through the above-mentioned analysis of the energy-integrating detector and the dual-energy X-ray detector, the ray detection structure has the following beneficial effects compared with the above-mentioned energy-integrating detector and the dual-energy X-ray detector:

(1) Compared with the energy-integrating detector, the dual-energy X-ray detection structure can provide histological information;

(2) Compared with the structure in which two X-ray tubes are arranged in parallel, the dual-energy X-ray detection structure is simpler, and does not require image time alignment, thus resulting in smaller imaging errors;

(3) Compared with the structure in which two X-ray tubes are arranged in an crossed manner, the dual-energy X-ray detection structure does not need space calibration, so the problem of errors caused by reconstructed images will not occur;

(4) Compared with the structure in which two detectors are arranged on an X-ray tube, the dual-energy X-ray detection structure does not have the problem that artifacts are formed due to the metal frame, thus avoiding the problem of crosstalk in the formed images .

Based on the same inventive concept, the invention also provides a detection method of the dual-energy X-ray. The realization scheme of the problem solving provided by the detection method of the dual-energy X-ray is similar to the realization scheme recorded in the X-ray detection structure above, so the specific definition of the following ray detection method can refer to the definition in the above-mentioned the detection structure of the dual-energy X-ray, and will not be repeated here.

The the dual-energy X-ray detection structure specifically includes the following steps:

S0: attching the first electrode assembly to the first side and the second electrode assembly to the second side, in which the first electrode 34 and the third electrode 36 are connected to the positive electrode output terminal of the power supply assembly, while the second electrode 33 and the fourth electrode 35 are connected to the grounding output terminal of the power supply assembly.
In this step, the photon absorber 32 may include a first side for the incidence of the dual-energy X-ray and a second side opposite to the first side.

S1: The power supply assembly applies a bias voltage to the first electrode assembly or the second electrode assembly. When a bias voltage is applied to the first electrode assembly, the second electrode assembly is suspended, and a potential difference is formed between the first electrode 34 and the second electrode 33. When the bias voltage is applied to the second electrode assembly, the first electrode assembly is suspended, and a potential difference is formed between the third electrode 36 and the fourth electrode 35 on the second electrode assembly.
In this step, the first electrode assembly is attached to the first side, and the second electrode assembly is attached to the second side. When a bias power supply applies a bias voltage to the first electrode assembly, the first electrode assembly forms an electric field perpendicular to the incident direction of dual-energy X-ray on the first side. When the bias power supply applies a bias voltage to the second electrode assembly, the second electrode assembly forms an electric field perpendicular to the incident direction of the dual-energy X-ray on the second side.

S2: irradiating dual-energy X-ray into the first side, then a low-energy X-ray generates photo-generated electron-hole pairs near the first side, and a high-energy X-ray generates photo-generated electron-hole pairs near the second side. Among them, when a bias voltage is applied to the first electrode assembly, the potential difference between the first electrode 34 and the second electrode 33 causes the photo-generated electron-hole pairs generated by low-energy X-ray to generate photo-generated electrons 38 and photo-generated holes 37, and then they drift toward the first electrode 34 and the second electrode 33, respectively. When a bias voltage is applied to the second electrode assembly, the potential difference between the third electrode 36 and the fourth electrode 35 causes the photo-generated electron-hole pairs generated by the high-energy X-ray to generate photo-generated electrons 38 and photo-generated holes 37, and then they drift toward the third electrode 36 and the fourth electrode 35, respectively.
In this step, an incident window may be arranged on the first side, and dual-energy X-ray is incident on the photon absorber 32 from the incident window. In addition, in the detection process, the bias voltage can be first applied to the first electrode assembly, and the second electrode assembly is all grounded or suspended to obtain the current signal corresponding to the low-energy X-ray. Then, the first electrode assembly is all grounded or suspended, and the bias voltage is applied to the second electrode assembly to obtain the current signal corresponding to the high-energy X-ray. Through the above process, the influence of polarization on the detection current can be reduced, and the average value of the obtained current signal is taken as the current signal of the dual-energy X-ray. It can be understood that the second electrode assembly can also be attached to one side of the incident window. When the incident window is arranged on one side of the second electrode assembly, the switching mode is the same as that described above, so the details are not repeated here.

S3: obtaining photo-generated electrons 38 and photo-generated holes 37 drifting on one side of the first electrode assembly, and obtaining photo-generated electrons 38 and photo-generated holes 37 drifting on one side of the second electrode assembly.

S4: based on the photo-generated electrons 38 and photo-generated holes 37 drifting on one side of the first electrode assembly, obtaining a current signal to obtain a detection signal corresponding low-energy X-ray. And, based on the photo-generated electrons 38 and photo-generated holes 37 on one side of the second electrode assembly, obtaining a current signal to obtain a detection signal corresponding high-energy X-ray .

In this step, the specific process of obtaining the detection signal corresponding the low-energy X-ray and the detection signal corresponding the high-energy X-ray is the same as the above process,which obtaining the corresponding current signals through the first differential amplifier and the second differential amplifierand then obtaining the detection signal of dual energy X-rays, so the details are not repeated here.

In another embodiment, one resistor can be added between the first electrode 34 and the second electrode 33 of the first electrode assembly, and a current signal of the corresponding ray in the dual-energy X-ray can be derived by obtaining the voltage across the resistor and converting it. Similarly, one resistor can be added between the third electrode 36 and the fourth electrode 35 of the second electrode assembly, and a current signal of the corresponding ray in the dual-energy X-ray can be derived by obtaining the voltage across the resistor and converting it.

S5: obtaining the density of the detected object based on the detection signals of low-energy X-ray and high-energy X-ray, and colorizing the detection signals of low-energy X-ray and high-energy X-ray.

In this step, determining the density of the detected object according to the detection signals being obtained on the first electrode assembly and the second electrode assembly, and colorizing the detection signals of low-energy X-ray and high-energy X-ray by using the upper computer, thus improving the recognition ability of dual-energy X-ray images.

It can be understood that the above embodiment only expresses the preferred embodiment of the present invention, and its description is more specific and detailed, but it cannot be understood as limiting the patent scope of the present invention; It should be pointed out that for ordinary technicians in this field, the above technical features can be freely combined without departing from the concept of the present invention, and several modifications and improvements can be made, which are all within the scope of protection of the present invention; Therefore, all equivalent transformations and modifications made with the scope of the claims of the present invention should belong to the scope of the claims of the present invention.

## Claims

1. A dual-energy X-ray detection structure, comprising a power supply assembly and a detection assembly, the power supply assembly has a positive electrode output terminal and a grounding output terminal;

the dual-energy X-ray comprises a low-energy X-ray and a high-energy X-ray;
the detection assembly comprises a photon absorber, a first electrode assembly and a second electrode assembly symmetrically attached to both sides of the photon absorber;
the photon absorber comprises a first side for the incidence of the dual-energy X-ray and a second side opposite to the first side, wherein the low-energy X-ray is configure to generate photo-generated electron-hole pairs on the first side, and the high-energy X-ray is configure to generate photo-generated electron-hole pairs on the second side;
the first electrode assembly is attached to the first side of the photon absorber, and the second electrode assembly is attached to the second side of the photon absorber;
the first electrode assembly comprises at least one first electrode and at least one second electrode, wherein one of the at least one first electrode and the at least one second electrode is connected to the positive electrode output terminal, and the other of the at least one second electrode and the at least one first electrode is connected to the grounding output terminal; when a bias voltage is applied to the first electrode assembly, a potential difference is formed between the first electrode and the second electrode, so that photo-generated electrons and photo-generated holes are generated by the photo-generated electron-hole pairs generated by the incidence of the low-energy X-ray in an area near the first side, and then they drift toward the at least one first electrode and the at least one second electrode, respectively, to form the detection signal of the low-energy X-ray;
the second electrode assembly comprises at least one third electrode and at least one fourth electrode, wherein one of the at least one third electrode and the at least one fourth electrode is connected to the positive electrode output terminal, and the other of the at least one fourth electrode and the at least one third electrode is connected to the grounding output terminal, when a bias voltage is configure to the second electrode assembly, a potential difference is formed between the third electrode and the fourth electrode, so that photo-generated electrons and photo-generated holes are generated by the photo-generated electron-hole pairs generated by the incidence of the high-energy X-ray in an area near the second side, and then they drift toward the at least one third electrode and the at least one fourth electrode, respectively, to form the detection signal of the high-energy X-ray.

2. The dual-energy X-ray detection structure according to claim 1, wherein the energy level of the low-energy X-ray is tens of thousands of electron volts;
the energy level of the high-energy X-ray is hundreds of thousands of electron volts to millions of electron volts.

3. The dual-energy X-ray detection structure according to claim 1, wherein the photon absorber is one of cadmium telluride, cadmium zinc telluride, and perovskite single crystal.

4. The dual-energy X-ray detection structure according to claim 3, wherein the thickness of the photon absorber along an incident direction of the dual-energy X-ray is 5 mm to 10 mm.

5. The dual-energy X-ray detection structure according to claim 1, wherein the at least one first electrode, the at least one second electrode, the at least one third electrode, and the at least one fourth electrode are all interdigitated electrodes;
the interdigitated electrodes comprise a bottom, and rectangular teeth symmetrically arranged on both sides of the bottom and extending outwards from the bottom, and the rectangular teeth and the bottom form a concave structure.

6. The dual-energy X-ray detection structure according to any one of claims 1-5, wherein the power supply assembly is a bias power supply with the positive electrode output terminal and the grounding output terminal, the at least one first electrode and the at least one third electrode are connected to the positive electrode output terminal, and the at least one second electrode and the at least one fourth electrode are connected to the grounding output terminal.

7. The dual-energy X-ray detection structure according to any one of claims 1-5, wherein the detection assembly further comprises a first differential amplifier and a second differential amplifier, wherein the first differential amplifier is connected to the first electrode and the second electrode, respectively, an electrical loop is formed between the first electrode and the second electrode for amplifying the current signal on the first electrode assembly, the second differential amplifier is connected to the third electrode and the fourth electrode, respectively, an electrical loop is formed between the third electrode and the fourth electrode for amplifying the current signal on the second electrode assembly.

8. A dual-energy X-ray detection method applying the dual-energy X-ray detection structure according to any one of claims 1-7, comprises the following steps:

S1: the power supply assembly applies a bias voltage to the first electrode assembly or the second electrode assembly; when the bias voltage is applied to the first electrode assembly, the second electrode assembly is configure to suspended, and a potential difference is formed between the first electrode and the second electrode; when the bias voltage is applied to the second electrode assembly, the first electrode assembly is configure to suspended, and a potential difference is formed between the third electrode and the fourth electrode;

S2: irradiating the dual-energy X-ray into the first side, causing the low-energy X-ray to generate photo-generated electron-hole pairs near the first side, and the high-energy X-ray to generate photo-generated electron-hole pairs near the second side; wherein when a bias voltage is applied to the first electrode assembly, a potential difference between the first electrode and the second electrode causes the photo-generated electron-hole pairs generated by the low-energy X-ray to generate the photo-generated electrons and the photo-generated holes, and they drift toward the at least one first electrode and the at least one second electrode, respectively; when a bias voltage is applied to the second electrode assembly, a potential difference between the third electrode and the fourth electrode causes the photo-generated electron-hole pairs generated by the high-energy X-ray to generate the photo-generated electrons and the photo-generated holes, and they drift toward the at least one third electrode and the at least one fourth electrode, respectively;

S3: obtaining the photo-generated electrons and photo-generated holes drifting on one side of the first electrode assembly, and obtaining the photo-generated electrons and photo-generated holes drifting on one side of the second electrode assembly;

S4: based on the photo-generated electrons and the photo-generated holes drifting on one side of the first electrode assembly, obtaining a current signal, to obtain a detection signal corresponding the low-energy X-ray, and based on the photo-generated electrons and the photo-generated holes on one side of the second electrode assembly, obtaining a current signal, to obtain a detection signal corresponding the high-energy X-ray.

9. The dual-energy X-ray detection method according to claim 8, wherein in the step S1, when the bias voltage is applied to the first electrode assembly, the first electrode assembly forms an electric field perpendicular to the dual-energy X-ray on the first side, and when the bias voltage is applied to the second electrode assembly, the second electrode assembly forms an electric field perpendicular to the dual-energy X-ray on the second side.

10. The dual-energy detection method X-ray according to claim 8, wherein before the step S1, it comprises: step S0: attching the first electrode assembly to the first side and the second electrode assembly to the second side, wherein the at least one first electrode and the at least one third electrode are connected to the positive electrode output terminal of the power supply assembly, and the at least one second electrode and the at least one fourth electrode are connected to the grounding output terminal of the power supply assembly.

11. The dual-energy X-ray detection method according to claim 8, wherein it further comprises: S5: determining the density of the detected object based on the detection signals of the low-energy X-ray and the high-energy X-ray, and colorizing the detection signals of the low-energy X-ray and the high-energy X-ray.

FIG. 1

FIG. 2

FIG. 3

FIG. 4

FIG. 5

FIG. 6

FIG. 7

FIG. 8

FIG. 9

Fig. 10

Fig. 11

Fig. 12

Fig. 13

## INTERNATIONAL SEARCH REPORT

| International application No. |
| --- |
| **PCT/CN2023/138951** |

| | |
| --- | --- |
| **A.** | **CLASSIFICATION OF SUBJECT MATTER** |
| | G01T1/16(2006.01)i |

According to International Patent Classification (IPC) or to both national classification and IPC

| | |
| --- | --- |
| **B.** | **FIELDS SEARCHED** |

Minimum documentation searched (classification system followed by classification symbols)

G01T1/-, G01N9/24 (IPC)

Documentation searched other than minimum documentation to the extent that such documents are included in the fields searched

Electronic data base consulted during the international search (name of data base and, where practicable, search terms used)

CNTXT, ENTXTC, DWPI, CNKI: 双能, X射线, X光, 探测, 电极, 信号, 积分, dual energy, x ray, detect+, electrode, signal, integral

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| PX | CN 116755132 A (CHINA NUCLEAR POWER ENGINEERING CO., LTD. et al.) 15 September 2023 (2023-09-15) claims 1-11, description, paragraphs 0053-0097, and figures 1-13 | 1-11 |
| A | CN 104838289 A (KONINKL PHILIPS NV) 12 August 2015 (2015-08-12) description, paragraphs 0005-0071, and figures 1-9 | 1-11 |
| A | CN 108183119 A (SOUTHEAST UNIVERSITY) 19 June 2018 (2018-06-19) entire document | 1-11 |
| A | CN 105510363 A (NUCTECH CO., LTD.) 20 April 2016 (2016-04-20) entire document | 1-11 |
| A | CN 111293131 A (SHENZHEN INSTITUTES OF ADVANCED TECHNOLOGY, CHINESE ACADEMY OF SCIENCES) 16 June 2020 (2020-06-16) entire document | 1-11 |
| A | CN 101937095 A (NUCTECH CO., LTD.) 05 January 2011 (2011-01-05) entire document | 1-11 |

☑ Further documents are listed in the continuation of Box C.　　☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **28 February 2024** | **04 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/138951** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 101937094 A (NUCTECH CO., LTD.) 05 January 2011 (2011-01-05) entire document | 1-11 |
| A | CN 209728185 U (TONGYUANWEI (BEIJING) SEMICONDUCTOR TECHNOLOGY CO., LTD.) 03 December 2019 (2019-12-03) entire document | 1-11 |
| A | CN 114063137 A (SUZHOU YIXIAN ELECTRONIC TECHNOLOGY CO., LTD.) 18 February 2022 (2022-02-18) entire document | 1-11 |
| A | WO 2023066094 A1 (SUZHOU YIXIAN ELECTRONIC TECHNOLOGY CO., LTD.) 27 April 2023 (2023-04-27) entire document | 1-11 |
| A | WO 2022142431 A1 (IRAY TECHNOLOGY CO., LTD.) 07 July 2022 (2022-07-07) entire document | 1-11 |
| A | EP 1327161 A1 (XCOUNTER AB) 16 July 2003 (2003-07-16) entire document | 1-11 |
| A | US 2017168168 A1 (DANMARKS TEKNISKE UNIVERSITET) 15 June 2017 (2017-06-15) entire document | 1-11 |

Form PCT/ISA/210 (second sheet) (July 2022)

**INTERNATIONAL SEARCH REPORT**
Information on patent family members

International application No.

**PCT/CN2023/138951**

| Patent document cited in search report | | | Publication date (day/month/year) | Patent family member(s) | | | Publication date (day/month/year) |
|---|---|---|---|---|---|---|---|
| CN | 116755132 | A | 15 September 2023 | None | | | |
| CN | 104838289 | A | 12 August 2015 | BR | 112015012775 | A2 | 11 July 2017 |
| | | | | EP | 2929373 | A1 | 14 October 2015 |
| | | | | EP | 2929373 | B1 | 03 April 2019 |
| | | | | WO | 2014087290 | A1 | 12 June 2014 |
| | | | | JP | 2016505827 | A | 25 February 2016 |
| | | | | JP | 6349325 | B2 | 27 June 2018 |
| | | | | RU | 2015126867 | A | 11 January 2017 |
| | | | | US | 2015301199 | A1 | 22 October 2015 |
| | | | | US | 10422892 | B2 | 24 September 2019 |
| CN | 108183119 | A | 19 June 2018 | None | | | |
| CN | 105510363 | A | 20 April 2016 | US | 2017184515 | A1 | 29 June 2017 |
| | | | | US | 10401308 | B2 | 03 September 2019 |
| | | | | DE | 102016218920 | A1 | 29 June 2017 |
| | | | | GB | 201616620 | D0 | 16 November 2016 |
| | | | | GB | 2545947 | A | 05 July 2017 |
| | | | | GB | 2545947 | B | 08 July 2020 |
| CN | 111293131 | A | 16 June 2020 | WO | 2021164416 | A1 | 26 August 2021 |
| CN | 101937095 | A | 05 January 2011 | None | | | |
| CN | 101937094 | A | 05 January 2011 | None | | | |
| CN | 209728185 | U | 03 December 2019 | None | | | |
| CN | 114063137 | A | 18 February 2022 | None | | | |
| WO | 2023066094 | A1 | 27 April 2023 | None | | | |
| WO | 2022142431 | A1 | 07 July 2022 | None | | | |
| EP | 1327161 | A1 | 16 July 2003 | AU | 8819801 | A | 02 April 2002 |
| | | | | US | 6546070 | B1 | 08 April 2003 |
| | | | | WO | 0225312 | A1 | 28 March 2002 |
| | | | | SE | 0003356 | D0 | 20 September 2000 |
| | | | | SE | 0003356 | L | 07 May 2002 |
| | | | | SE | 522428 | C2 | 10 February 2004 |
| | | | | JP | 2004510141 | A | 02 April 2004 |
| | | | | CA | 2422614 | A1 | 28 March 2002 |
| | | | | AU | 2001288198 | B2 | 11 May 2006 |
| | | | | KR | 20030038750 | A | 16 May 2003 |
| | | | | KR | 100857768 | B1 | 09 September 2008 |
| US | 2017168168 | A1 | 15 June 2017 | WO | 2015078902 | A1 | 04 June 2015 |
| | | | | EP | 3074792 | A1 | 05 October 2016 |
| | | | | EP | 3074792 | B1 | 11 October 2017 |
| | | | | US | 9921315 | B2 | 20 March 2018 |
| | | | | EP | 2876465 | A1 | 27 May 2015 |

Form PCT/ISA/210 (patent family annex) (July 2022)